# EUROPÄISCHE PATENTSCHRIFT

(11) **EP 0 738 836 B1**
(45) Veröffentlichungstag und Bekanntmachung des Hinweises auf die Patenterteilung: **31.05.2000**
(21) Anmeldenummer: 96104928.5
(22) Anmeldetag: 28.03.1996
(51) Int. Cl.: F16D 43/284, F16D 25/0638

(54) **Verfahren zur Drehzahlreglung einer Reibungskupplung in einem Antriebsmaschine und Antriebseinheit zur Dürchführing des Verfahrens**
Method of speed control of a friction clutch in a drive machine and a drive unit for the method
Procédé de commande de la vitesse d'un embrayage à friction d'une machine d'entraînement et unité d'entraînement à cet effet

(30) Priorität: 21.04.1995 DE 19514276
(43) Veröffentlichungstag der Anmeldung: 23.10.1996
(73) Patentinhaber: Voith Turbo Beteiligungs GmbH, 89522 Heidenheim (DE)
(72) Erfinder: Wahl, Georg, 74594 Kressberg (DE); Kutzay, Friedrich, 74564 Crailsheim (DE); Rögner, Thomas, 74592 Kirchberg (DE); Pröger, Dieter, 74564 Crailsheim (DE)
(74) Vertreter: Dr. Weitzel & Partner

(56) Entgegenhaltungen:
- EP-A- 0 098 054
- EP-A- 0 255 614
- EP-A- 0 282 741
- DE-C- 176 791
- FR-E- 79 576
- GB-A- 522 519
- GB-A- 623 003
- US-A- 3 373 853

## Beschreibung

Die Erfindung betrifft ein Verfahren zur Drehzahlregelung einer Reibungskupplung in einem Antriebsstrang, umfassend eine Antriebsmaschine, im einzelnen mit den Merkmalen aus dem Oberbegriff des Anspruchs 1; ferner eine Antriebseinheit zur Durchführung des Verfahrens.

Es ist bekannt, daß die Drehzahlregelung von Reibkupplungen, insbesondere von Lamellenkupplungen über variable Kraftbeaufschlagung mittels separat erzeugtem hydraulischem Druck über einen Kolben erfolgt. Problematisch gestaltet sich jedoch die Integration derartiger drehzahlgeregelter Kupplungen in einem Antriebsstrang mit großem Gesamtregelbereich. So erfolgt beispielsweise bei Schiffsantrieben die Abregelung der Propellerdrehzahl, d.h. der Drehzahl der Arbeitsmaschine vom Vollastpunkt bis zur Motorleerlaufdrehzahl mit der Antriebsmaschine, insbesondere mit einem Dieselmotor, welcher beispielsweise einen Regelbereich von ca. 3:1 aufweist, und dann weiter mit einer Regelkupplung, deren Regelbereich beispielsweise bei ca. 4:1 liegt. Damit ergibt sich der Gesamtregelbereich des Antriebes zu 12:1.

Die zur Drehmomentenübertragung erforderliche Anpreßkraft der Lamellen ändert sich beim Antrieb von Propellern (Kreiselmaschinen) proportional mit dem Drehmoment und damit quadratisch mit der Drehzahl. Dies bedeutet, daß bei maximaler Propellerdrehzahl der zur Anpressung der Lamellen erforderliche Druck 100 % betragen muß, während im Bereich der Leerlaufdrehzahl nur ein Bruchteil, beispielsweise ca. 10 % des maximal erforderlichen Druckes, notwendig ist. Bei einem üblichen Regelbereich einer Stellkupplung von 4:1 ergibt sich damit für die niedrigste Propellerdrehzahl ein erforderlicher hydraulischer Druck von unter 1%.

Für den Gesamtregelbereich der Antriebseinheit, ergibt sich somit eine erforderliche Anpreßkraftregelung der Lamellen mittels Kraftbeaufschlagung mit separat erzeugtem hydraulischem Druck in einem Druckbereich von nahezu 1 % bis 100 %. Die Beherrschung dieses enorm großen Druckbereiches ist mit wirtschaftlich vertretbarem Aufwand nur unbefriedigend möglich. Der Erfindung liegt deshalb die Aufgabe zugrunde, ein Verfahren zum Betreiben einer Antriebseinheit mit Motor und Reibkupplung derart weiterzuentwickeln, daß die genannten Nachteile vermieden werden.

Die erfindungsgemäße Lösung der Aufgabe ist durch die kennzeichnenden Merkmale des Anspruchs 1 für das Verfahren und des Anspruchs 3 für die Vorrichtung charakterisiert. Erfindungsgemäß wird zur Erzeugung der Anpreßkraft auf die Lamellen der Reibkupplung wenigstens für den Bereich vom Erreichen der Leerlaufdrehzahl bis zur maximalen Drehzahl der Antriebsmaschine der Rotationsdruck eines rotierenden Flüssigkeitsringes, beispielsweise eines auf einen rotierenden Kolben wirkenden Ölringes genutzt. Für die Größe der mittels Rotationsdruck erzeugten Anpreßkräfte ist neben der Drehzahl auch die Größe des Ölringes, d.h. die Auslegung und Befüllung der rotierenden Zylinder-Kolbeneinheit maßgebend. Die Erfindung ruht dabei auf dem Grundgedanken, daß beim Einsatz des Prinzips Rotationsdruck die Anpassung der zur Drehmomentenübertragung jeweils erforderlichen Anpreßkraft auf die Lamellen sich mit der Drehzahl der Antriebsmaschine selbsttätig einstellt. Der aktiv von der Reibkupplung, d.h. vom Regelorgan zu bestreichende Regelbereich reduziert sich damit auf einen Bruchteil des bei konventionellen Ausführungen vorhandenen aktiven Regelbereiches. Unter Regelbereich ist dabei der Bereich zu verstehen, in welchem durch Einflußnahme von außen der zum Aufbringen der Anpreßkraft erforderliche Druck variiert werden muß. Die aktive Druckregelung bzw. Anpreßkraftregelung ist bei der erfindungsgemäßen Lösung somit nur noch im Bereich der Drehzahlverstellung der Stellkupplung notwendig. Diese kann dabei durch Füllungsveränderung des rotierenden Ölringes nach dem Prinzip der Drosselung eines Steuerölstromes oder aber mittels eines Schöpfrohres erfolgen.

Die Nutzung des Prinzips Rotationsdruck ist, jedoch lediglich zum Zweck der Realisierung des selbsttätigen Ein- und Ausrückens der Kupplung aus den nachfolgend genannten Druckschriften bekannt:
- DE-C-176791
- GB-A-522519

Beide Druckschriften offenbaren Verfahren gemäß den Oberbegriff des Anspruchs 1, und mechanische Reibungskupplungen, welche wenigstens zwei zum Zwecke der Drehmomentenübertragung aneinander anpreßbare Kupplungsteile umfassen. Die zur Drehmomentenübertragung erforderliche Anpreßkraft für die Kupplungsteile wird hydraulisch aufgebracht. Die zur Drehmomentenübertragung erforderliche Anpreßkraft wird ab dem Erreichen der Leerlaufdrehzahl der Antriebsmaschine selbsttätig durch den Rotationsdruck eines rotierenden Ringes von Hydraulikflüssigkeit aufgrund der Fliehkraft aufgebracht. Eine freie Steuerbarkeit des Druckes durch Beeinflussung der Flüssigkeitsmenge im Druckraum ist nicht gegeben.

Vorrichtungsmäßig ist der Reibungskupplung wenigstens eine Einrichtung zum Aufbringen der zum Aneinanderpressen der beiden Kupplungsteile erforderlichen Anpreßkraft zugeordnet. Die Einrichtung umfaßt wenigstens eine, mit Hydraulikflüssigkeit beaufschlagbare Druckkammer und ein mit der Druckkammer gekoppeltes und mit dem Druck der Hydraulikflüssigkeit beaufschlagbares Betätigungsorgan, daß wenigstens mittelbar gegenüber den Kupplungsteilen wirksam wird, sowie Mittel zur Realisierung der Füllungsänderung. Die Druckkammer ist derart drehbar gelagert, daß diese im Betrieb der Antriebseinheit mit wenigstens einer Drehzahl proportional zur Drehzahl der Antriebswelle rotiert.

Die Druckkammer kann dabei beispielsweise von einer Zylinder/Kolbeneinheit gebildet werden. Dieser sind wenigstens ein Zulauf- und ein Ablaufkanal zugeordnet.

Der Kolben wirkt als Betätigungsorgan gegenüber den beiden Kupplungsteilen. Dies kann unmittelbar oder mittelbar, beispielsweise über einen zur Anpressung der Lamellen der Reibungskupplung eingesetzten Druckring erfolgen, welcher aufgrund der vom Kolben aufgebrachten Anpreßkraft gegenüber den Lamellen in axialer Richtung verschoben wird und diese dabei gegeneinander preßt. Eine andere Möglichkeit besteht darin, als Einrichtung zum Aufbringen der Anpreßkraft ein zylindrisches, koaxial zur Reibungskupplung angeordnetes Bauteil zu verwenden, welches als Betätigungsorgan zur Anpressung der Lamellen der Reibungskupplung eine wenigstens teilweise elastisch ausgeführte Wand, beispielsweise in Form einer Membran aufweist.

Der in der durch Rotation mit der Flüssigkeit gefüllten Druckkammer erzeugte Druck beaufschlagt das Betätigungsorgan und wird dabei in eine Kraft umgewandelt, die wiederum gegenüber den Lamellen wirksam wird.

Des weiteren besteht die Möglichkeit des Einsatzes einer Hintereinanderschaltung der Einrichtungen, beispielsweise in Form einer Mehrkolbenausführung. Die Kolben werden dabei kraftschlüssig in Reihe geschaltet, so daß jeder Kolben von einem separaten rotierenden Ölring beaufschlagt wird. Jeder dieser Ölringe kann für sich gesteuert werden. Es ergeben sich dadurch größere notwendige Füllungsänderungen und die Füllungseinstellung wird unempfindlicher.

Durch die erfindungsgemäße Lösung der Aufgabe ist es lediglich erforderlich, die Anpreßkraft bei einer Reibungskupplung während des Anfahrvorganges oder bei Schleichfahrt in einem Antriebsstrang mit einer Antriebsmaschine durch Füllungsveränderung des Ölringes bzw. Druckmittelringes zu realisieren. Nach dem Erreichen der Leerlaufdrehzahl der Antriebsmaschine, beispielsweise eines Dieselmotors, bildet sich ein stabiler rotierender Ölring im Druckraum aus, welcher einen Druck auf die Druckscheibe über beispielsweise einen Kolben quadratisch steigend zur Drehzahl der Antriebsmaschine aufbringt. Somit wird eine stufenlose Drehzahlregelung bis zur maximalen Drehzahl des Abtriebes erreicht. Der steuerungstechnische und konstruktive Aufwand kann somit auf ein Minimum reduziert werden.

Bevorzugte Anwendungsgebiete für das erfindungsgemäße Verfahren sind Antriebseinheiten mit einem großen Gesamtregelbereich. Dazu gehören beispielsweise auch Schiffsantriebe. Dort erfolgt üblicherweise die Abregelung der Propellerdrehzahl, wobei der Propeller der anzutreibenden Arbeitsmaschine entspricht, vom Vollastpunkt bis zur Motorleerlaufdrehzahl mit einem Dieselmotor, und von da ab weiter mit einer Regelkupplung.

Die erfindungsgemäße Lösung wird nachfolgend anhand von Figuren erläutert. Darin ist im übrigen folgendes dargestellt:
- Figur 1: zeigt eine konventionelle Lösung zur Drehzahlregelung von Reibkupplungen;
- Figur 2: verdeutlicht die Änderung der zur Drehmomentübertragung erforderlichen Anpreßkraft von Lamellen beim Antrieb von Propellern;
- Figur 3: verdeutlicht das Grundprinzip der erfindungsgemäßen Lösung am Beispiel einer Lamellenkupplung zum Antrieb von Kreiselmaschinen;
- Figur 4: verdeutlicht die Möglichkeit der Füllungsveränderung des rotierenden Ölringes mittels eines Schöpfrohres.

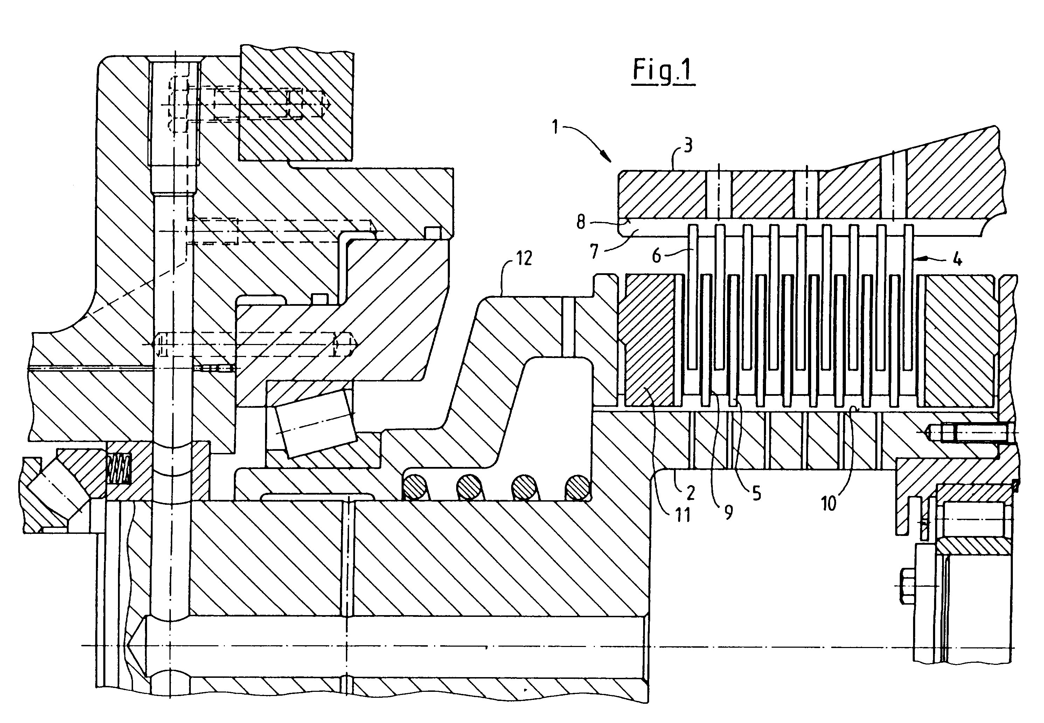

Die Figur 1 zeigt eine konventionelle Möglichkeit zur Drehzahlregelung von Reibkupplungen mittels variabler Kraftbeaufschlagung durch separat erzeugten hydraulischen Druck über einen Kolben. Die Reibkupplung ist hier in Form einer Lamellenkupplung 1 dargestellt. Diese umfaßt einen inneren Kupplungskörper 2, einen äußeren Kupplungskörper 3 und ein Lamellenpaket 4. Die einzelnen, in Innenlamellen 5 und Außenlamellen 6 einteilbare Lamellen des Lamellenpaketes 4 greifen jeweils formschlüssig in Nuten 7 am inneren Durchmesser 8 des äußeren Kupplungskörpers 3 bzw. in Nuten 9 am äußeren Durchmesser 10 des inneren Kupplungskörpers 2 ein. Die zur Kraftübertragung erforderliche Zusammenpressung der einzelnen Lamellen wird mittels einer Druckscheibe 11, welche gegen das Lamellenpaket 4 verschoben wird und dadurch eine Zusammenpressung der einzelnen Lamellen hervorruft, realisiert. Die zur Verschiebung erforderliche Kraft wird mittels eines Druckringes übertragen, wobei der mit dem Kolben übertragbare Druck hydraulisch erzeugt wird. Dieser Druck wird extern geregelt.

Die Problematik dieser bekannten Lösung liegt im Gesamtregelbereich eines Antriebes. Dieser Gesamtregelbereich ergibt sich dabei aus dem Regelbereich des Antriebsmotors, welcher z.B. als Dieselmotor ausgeführt sein kann, von etwa angenommen 3:1 und im Regelbereich der Regelkupplung von beispielsweise 4:1.

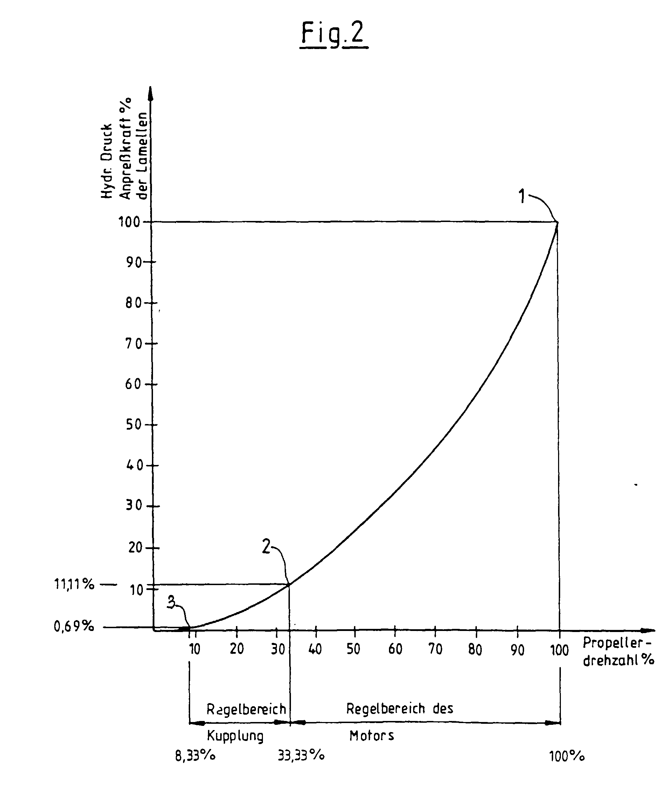

Die Figur 2 verdeutlicht in einem Diagramm an einem Beispiel die bei einer konventionellen Lösung erforderliche Änderung des hydraulischen Druckes und damit der Anpreßkraft auf die Lamellen. Die angegebenen Zahlenwerte dienen der Erläuterung. Die zur Drehmomentenübertragung erforderliche Anpreßkraft der Lamellen ändert sich beim Antrieb von Kreiselmaschinen, insbesondere von Propellern proportional mit dem Drehmoment und damit auch quadratisch mit der Drehzahl. Bei der mit der konventionellen Technik erfolgenden Einstellung der zur Drehmomentübertragung erforderlichen Anpreßkräfte der Lamellen durch Regelung eines externen Steuerdruckes ist im Punkt 1, dem Punkt maximaler Propellerdrehzahl ein Druck von 100 % erforderlich. Im Punkt 2, d.h. hier der Motorleerlaufdrehzahl, ist nur noch ein geringer Anteil des Druckes von Punkt 1 notwendig. Für die niedrigste Propellerdrehzahl, welche hier dem Punkt 3 entspricht, ist ein erforderlicher hydraulischer Druck auf den Anpreßkolben des Lamellenpaketes beispielsweise von weniger als 1 erforderlich. Dies bedeutet, daß bei konventionellen Lösungen der Druckbereich von fast 0 - 100 % beherrscht werden muß.

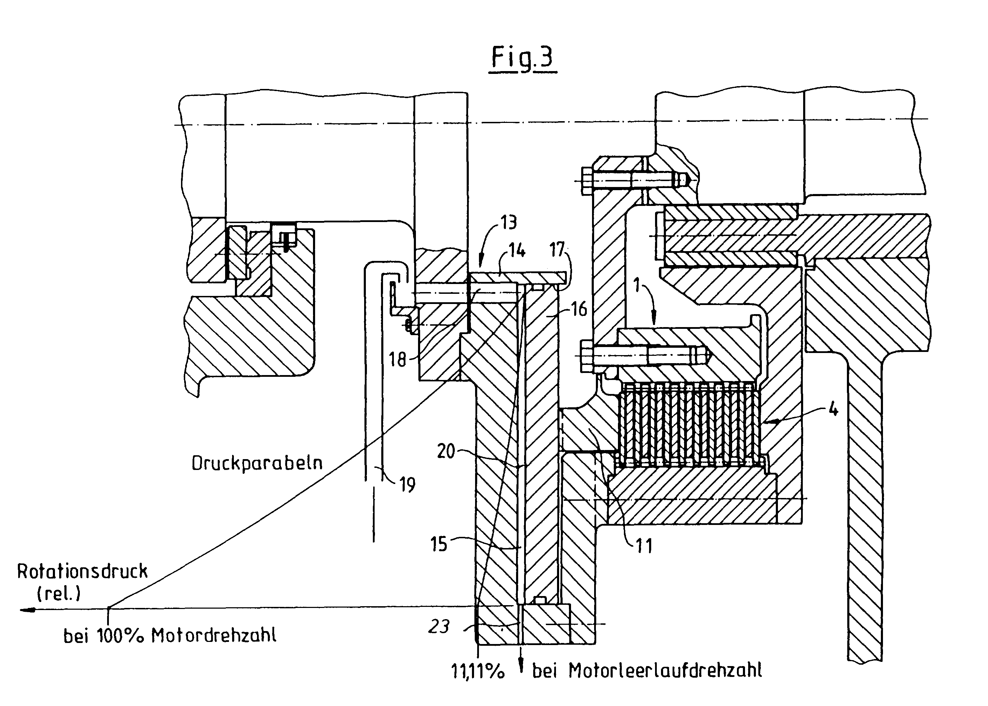

Die Figur 3 zeigt demgegenüber eine erfindungsgemäße Ausführung, bei welcher lediglich nur noch der Druckbereich am Beispiel des Diagrammes in Figur 2 von 0 - ca. 12 % beherrscht werden muß.

Die Figur 3 verdeutlicht eine Ausführung, bei welcher das erfindungsgemäße Prinzip des Rotationsdruckes angewandt wird. Die Lamellenkupplung 1 entspricht in ihrem Grundaufbau im wesentlichen der in der Figur 1 beschriebenen, weshalb für gleiche Elemente die gleichen Bezugszahlen verwendet werden. Die Lageänderung der Druckscheibe 11 und damit die Zusammenpressung der Lamellen des Lamellenpaketes 4 erfolgt dabei mittels einer Einrichtung 13. Diese Einrichtung funktioniert im Prinzip wie eine Zylinderkolbeneinheit. Die Einrichtung 13 umfaßt ein Zylinderelement 14, welches einen in seiner Befüllung veränderlichen Druckraum 15 umfaßt, und eine als Kolben wirkende Scheibe 16. Die Scheibe ist dabei flüssigkeitsundurchlässig an der Innenseite 17 des Zylinderelementes 14 geführt. Die Einrichtung 13 weist einen Zulauf 18 auf, welcher mit einer Druckmittelversorgungseinrichtung beispielsweise 19 gekoppelt ist.

Der Arbeits- bzw. Druckraum 15 wird mit einem Betriebsfluid, beispielsweise Öl gefüllt. Aufgrund der Rotation der Einrichtung bildet sich ein rotierender Ölring aus. Dies bedeutet, daß eine aktive Druckregelung, d.h. Regelung der Anpreßkraft der Lamellen nur im Bereich der Drehzahlverstellung der Kupplung 1 erforderlich ist. Im Motorregelbereich, d.h. im Bereich hoher Drehzahlen, resultiert die Anpreßkraft aus dem in Abhängigkeit von der Motordrehzahl rotierenden Ölring. Eine Druckeinstellung im Druckraum für diesen Bereich, um eine Verschiebung der Scheibe 16 zu ermöglichen, ist bei einer bestimmten Füllung nicht erforderlich.

Zur Drehzahlveränderung und damit zur Änderung der Anpreßkraft auf die Lamellen des Lamellenpaketes 4 ist eine Füllungsveränderung des rotierenden Ölringes erforderlich. Dies kann dabei nach zwei Prinzipien geschehen:
1. der Drosselung eines Steuerölstromes;
2. der Füllungseinstellung mittels eines Schöpfrohres.

Die Einrichtung 13 weist des weiteren einen Betriebsfluidablauf 23 auf. Es besteht die Möglichkeit, den Arbeits- bzw. Druckraum 15 ständig mit einer bestimmten Ölmenge zu befüllen, wobei diese sich über einen längeren Betriebszeitraum nicht ändert.

Bis zur Motorleerlaufdrehzahl, in diesem Beispiel entspricht die Leerlaufdrehzahl einer erforderlichen Anpreßkraft von 11,11 % gegenüber der erforderlichen Anpreßkraft bei voller Motordrehzahl, erfolgt durch Füllungsveränderung des rotierenden Ölringes die Drehzahlverstellung an der Kupplung. Ab Erreichen der Motorleerlaufdrehzahl wird der Ölring sich selbst überlassen, und der Druck auf eine Innenseite 20 der Scheibe 16 erhöht sich quadratisch mit zunehmender Drehzahl, wobei die Scheibe 16 in Richtung der Druckscheibe 11 verschoben wird und damit diese gegen das Lamellenpaket drückt. Ab Erreichen der Motorleerlaufdrehzahl ist somit keine Füllungsänderung mehr erforderlich.

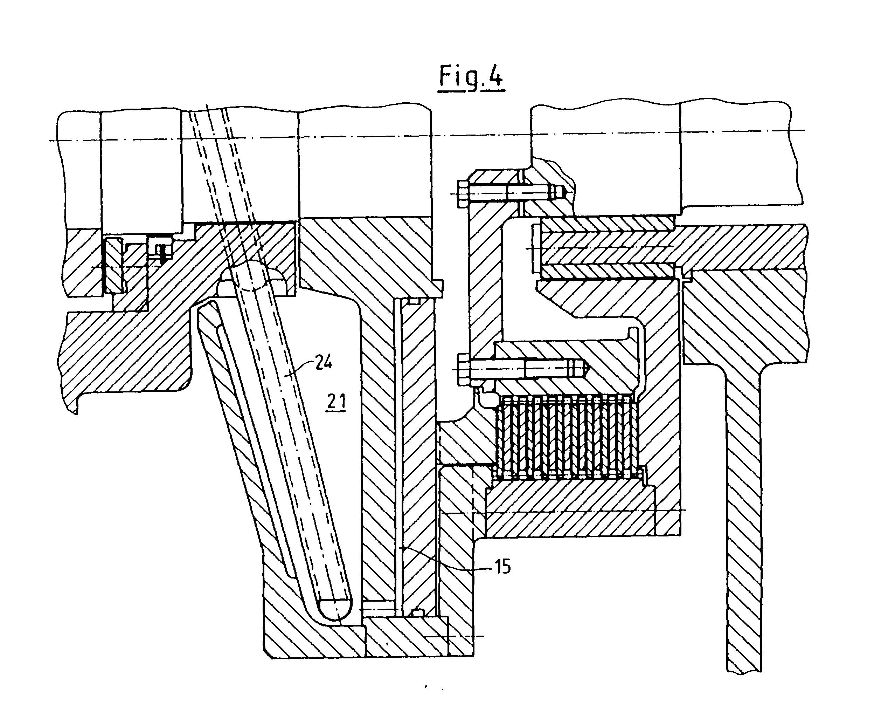

Die Figur 4 verdeutlicht eine Möglichkeit analog zum Funktionsprinzip in Figur 3, bei welchem jedoch die Füllungsveränderung des rotierenden Ölringes mittels eines Schöpfrohres 24 erfolgt. Das Schöpfrohr 24 erstreckt sich in eine dem Arbeits- bzw. Druckraum 15 vorgelagerte Kammer 21 hinein. Die Flüssigkeitsmenge im Druck- bzw. Arbeitsraum wird dabei bestimmt durch die radiale Stellung des im Vorraum angeordneten Schöpfrohres. Die Betätigung des Schöpfrohres kann manuell oder aber durch einen Stellantrieb, welcher auch in ein Regelsystem einbezogen werden kann, erfolgen.

## Patentansprüche

1. Verfahren zur Drehzahlregelung einer Reibungskupplung (1) in einer Antriebseinheit, umfassend eine Antriebsmaschine, wobei die Reibungskupplung (1) wenigstens zwei zum Zwecke der Drehmomentenübertragung aneinander anpreßbare Kupplungteile (4, 5, 6) umfaßt - ein erstes Kupplungsteil, welches wenigstens mittelbar mit der Antriebsmaschine gekoppelt ist, und ein zweites Kupplungteil, welches über das erste Kupplungsteil mit der Antriebsmaschine koppelbar ist;
1.1 bei welchem die zur Drehmomentenübertragung erforderliche Anpreßkraft für die Kupplungsteile (4, 5, 6) hydraulisch aufgebracht wird;
1.2 bei welchem die zur Drehmomentenübertragung erforderliche Anpreßkraft für die Kupplungsteile (4, 5, 6) wenigstens ab Erreichen der Leerlaufdrehzahl der Antriebsmaschine selbsttätig durch den Rotationsdruck eines rotierenden Ringes von Hydraulikflüssigkeit aufgebracht wird;
gekennzeichnet durch das folgende Merkmal:
1.3 zur Drehzahlverstellung im Anfahrbereich der Antriebseinheit oder bei Schleichfahrt wird der zum Aufbringen der Anpreßkraft erforderliche Druck durch aktive Einflußnahme von außen durch Füllungsgradänderung des rotierenden Ringes von Hydraulikflüssigkeit variiert.

2. Verfahren nach Anspruch 1,
2.1 bei welchem zur Erzeugung der Anpreßkraft wenigstens eine Zylinder/Kolbeneinheit (13) eingesetzt wird;
2.2 bei welchem die zur Drehmomentübertragung erforderliche Anpreßkraft zwischen den einzelnen Kupplungsteilen (4, 5, 6) durch Beaufschlagung des Kolbens (16) der Zylinder/Kolbeneinheit (13) mittels hydraulisch erzeugtem Druck realisiert wird;
gekennzeichnet durch das folgende Merkmal:
2.3 bei welchem die Zylinder/Kolbeneinheit (13) derart ausgeführt und angeordnet ist, daß die zur Drehmomentenübertragung erforderliche Anpreßkraft für die Kupplungsteile (4, 5, 6) wenigstens ab Erreichen der Leerlaufdrehzahl der Antriebsmaschine selbsttätig durch den Rotationsdruck des rotierenden Ringes von Hydraulikflüssigkeit im mit Hydraulikflüssigkeit befüllbaren, von Zylinder (14) und Kolben (16) gebildeten Raum (15) der Zylinder/Kolbeneinheit (13) aufgebracht wird.

3. Antriebseinheit zur Durchführung des Verfahrens nach einem der Ansprüche 1 oder 2;
3.1 mit einer Antriebsmaschine;
3.2 mit einer Reibungskupplung (1);
3.4 die Reibungskupplung (1) umfaßt wenigstens zwei Kupplungsteile (4, 5, 6) - ein erstes, wenigstens mittelbar mit der Antriebsmaschine gekoppeltes Kupplungsteil, und ein zweites, über das erste Kupplungsteil mit der Antriebsmaschine koppelbares Kupplungsteil;
3.4 der Reibungskupplung (1) ist wenigstens eine Einrichtung (13) zum Aufbringen der zum Aneinanderpressen der beiden Kupplungsteile (4, 5, 6) erforderlichen Anpreßkraft zugeordnet;
3.5 die Einrichtung (13) umfaßt wenigstens eine, mit Hydraulikflüssigkeit beaufschlagbare Druckkammer (15) und ein mit der Druckkammer (15) gekoppeltes und mit dem Druck der Hydraulikflüssigkeit beaufschlagbares Betätigungsorgan (16), daß wenigstens mittelbar an den Kupplungsteilen wirksam wird;
3.6 der Einrichtung (13) sind Mittel (24) zur Realisierung einer Füllungsänderung zugeordnet;
3.7 die Druckkammer (15) ist derart drehbar gelagert, daß diese im Betrieb der Antriebseinheit mit wenigstens einer Drehzahl proportional zur Drehzahl der Antriebswelle rotiert.

4. Antriebseinheit nach Anspruch 3, gekennzeichnet durch folgende Merkmale:
4.1 die Druckkammer (15) wird von einer drehbar gelagerten Zylinder/Kolbeneinheit (13) gebildet;
4.2 die Zylinder/Kolbeneinheit (13) ist koaxial zur Reibungskupplung (1) angeordnet;
4.3 der Kolben (16) ist gegen die Kupplungsteile (4, 5, 6) verschiebbar.

5. Antriebseinheit nach Anspruch 3, gekennzeichnet durch folgende Merkmale:
4.1 die Druckkammer wird von einem drehbar gelagerten zylindrischen Bauteil mit einer gegenüber den Kupplungsteilen wirksam werdenden, wenigstens teilweise als elastische Membran ausgeführten Wand gebildet;
5.2 das zylindrische Bauteil ist koaxial zur Reibungskupplung angeordnet.

6. Antriebseinheit nach einem der Ansprüche 3 bis 5, dadurch gekennzeichnet, daß das Mittel ein Schöpfrohr ist.

7. Antriebseinheit nach einem der Ansprüche 3 bis 6, dadurch gekennzeichnet, daß eine Vielzahl von Einrichtungen in Reihe hintereinandergeschaltet sind.

## Claims

1. Method of speed control of a friction clutch (1) in a drive unit, comprising a drive machine, the friction clutch (1) comprising at least two clutch parts (4, 5, 6) able to be pressed one against the other for the purpose of transmitting torque - a first clutch part, which is connected at least indirectly to the drive machine, and a second clutch part, which can be connected by way of the first clutch part to the drive machine;
1.1 in which the contact force for the clutch parts (4, 5, 6), necessary for transmitting torque, is applied hydraulically;
1.2 in which the contact force for the clutch parts (4, 5, 6), necessary for transmitting torque, is applied at least on reaching the idling speed of the drive machine automatically by the rotary pressure of a rotating ring of hydraulic fluid;
characterised by the following feature:
1.3 to adjust the speed in the starting range of the drive unit or at the time of crawling, the pressure necessary for applying the contact force is varied due to an active influence from outside by changing the degree of filling of the rotating ring of hydraulic fluid.

2. Method according to Claim 1,
2.1 in which at least one cylinder/piston unit (13) is used for producing the contact force;
2.2 in which the contact force between the individual clutch parts (4, 5, 6), necessary for transmitting torque, is achieved by acting on the piston (16) of the cylinder/piston unit (13) by means of hydraulically produced pressure;
characterised by the following feature:
2.3 in which the cylinder/piston unit (13) is constructed and arranged so that the contact force for the clutch parts (4, 5, 6) necessary for transmitting torque, is applied at least on reaching the idling speed of the drive machine automatically by the rotary pressure of the rotating ring of hydraulic fluid in the chamber (15) of the cylinder/piston unit (13) able to be filled with hydraulic fluid and formed by the cylinder (14) and piston (16).

3. Drive unit for carrying out the method according to one of Claims 1 or 2;
3.1 with a drive machine;
3.2 with a friction clutch (1);
3.4 the friction clutch (1) comprises at least two clutch parts (4, 5, 6) - a first clutch part connected at least indirectly to the drive machine, and a second clutch part able to be connected by way of the first clutch part to the drive machine;
3.4 associated with the friction clutch (1) is at least one device (13) for applying the contact force necessary for pressing the two clutch parts (4, 5, 6) one against the other;
3.5 the device (13) comprises at least one pressure chamber (15) able to be supplied with hydraulic fluid and an actuating member (16) connected to the pressure chamber (15) and able to be acted upon by the pressure of the hydraulic fluid, which actuating member is active at least indirectly on the clutch parts;
3.6 associated with the device (13) are means (24) for achieving a change of filling;
3.7 the pressure chamber (15) is mounted to rotate so that during operation of the drive unit, the pressure chamber rotates at at least one speed proportional to the speed of the drive shaft.

4. Drive unit according to Claim 3, characterised by the following features:
4.1 the pressure chamber (15) is formed by a cylinder/piston unit (13) mounted to rotate;
4.2 the cylinder/piston unit (13) is arranged coaxially with respect to the friction clutch (1);
4.3 the piston (16) is displaceable with respect to the clutch parts (4, 5, 6).

5. Drive unit according to Claim 3, characterised by the following features:
5.1 the pressure chamber is formed by a cylindrical component mounted to rotate, with a wall constructed at least partially as an elastic diaphragm and becoming active with respect to the clutch parts;
5.2 the cylindrical component is arranged coaxially with respect to the friction clutch.

6. Drive unit according to one of Claims 3 to 5, characterised in that the means is a bailing tube.

7. Drive unit according to one of Claims 3 to 6, characterised in that a plurality of devices are series-connected.

## Revendications

1. Procédé de régulation de la vitesse d'un embrayage à friction (**1**) dans une unité d'entraînement, comprenant une machine d'entraînement, l'embrayage à friction (**1**) comprenant au moins deux parties d'embrayage **(4, 5, 6)** pouvant être pressées l'une contre l'autre à des fins de transmission du couple - une première partie d'embrayage qui est couplée au moins médiatement à la machine d'entraînement, et une deuxième partie d'embrayage qui peut être couplée à la machine d'entraînement par l'intermédiaire de la première partie d'embrayage ;
dans lequel la force de pressage nécessaire pour transmettre le couple avec les parties d'embrayage **(4, 5, 6)** est appliquée de manière hydraulique ;
dans lequel la force de pressage nécessaire pour transmettre le couple avec les parties d'embrayage **(4, 5, 6)** est appliquée automatiquement, au plus tard quand on atteint la vitesse de rotation à vide de la machine d'entraînement, par la pression de rotation d'une bague rotative de liquide hydraulique ;
caractérisé par les caractéristiques suivantes :
pour le réglage de la vitesse dans la plage de démarrage de l'unité d'entraînement ou en cas d'avance lente, la pression nécessaire à l'application de la force de pression est variée par intervention active de l'extérieur, par variation du niveau de remplissage de la bague rotative de liquide hydraulique.

2. Procédé selon la revendication **1**,
**2.1** dans lequel au moins une unité à piston et cylindre (**13**) est employée pour produire la force de pression ;
**2.2** dans lequel la force de pressage nécessaire à la transmission de couple entre les diverses parties d'embrayage (**4, 5, 6**) est réalisée en exposant le piston (**16**) de l'unité à piston et cylindre (**13**) à une pression produite hydrauliquement ;
caractérisé par les caractéristiques suivantes :
dans lequel l'unité à piston et cylindre (**13**) est réalisée et agencée de telle manière que la force de pressage nécessaire à la transmission de couple avec les parties d'embrayage **(4, 5, 6)** est appliquée automatiquement, au plus tard quand on atteint la vitesse de rotation à vide de la machine d'entraînement, par la pression de rotation d'une bague rotative de liquide hydraulique dans la chambre (**15**) de l'unité à piston et cylindre **(13)** formée par le cylindre **(14)** et de piston **(16)** et pouvant être remplie de liquide hydraulique.

3. Unité d'entraînement pour réaliser le procédé selon l'une des revendications **1** ou **2** ;
**3.1** avec une machine d'entraînement ;
**3.2** avec un embrayage à friction **(1)** ;
**3.4** l'embrayage à friction **(1)** comprend au moins deux parties d'embrayage **(4, 5, 6)** - une première partie d'embrayage qui est couplée au moins médiatement à la machine d'entraînement, et une deuxième partie d'embrayage qui peut être couplée à la machine d'entraînement par l'intermédiaire de la première partie d'embrayage ;
**3.4** à l'embrayage à friction (**1**) est associé au moins un dispositif **(13)** pour appliquer la force de pressage nécessaire pour presser l'une contre l'autre les deux parties d'embrayage **(4, 5, 6)** ;
**3.5** le dispositif **(13)** comprend au moins un chambre de pression **(15)** pouvant être exposée à du liquide hydraulique et un organe de manoeuvre **(16)** couplé à la chambre de pression **(15)** et pouvant être exposé à la pression du liquide hydraulique, organe qui agit au moins médiatement sur les parties d'embrayage ;
**3.6** au dispositif **(13)** sont associés des moyens **(24)** pour réaliser une variation de niveau de remplissage ;
**3.7** la chambre de pression **(15)** est montée rotative de telle manière qu'en service de l'unité d'entraînement, elle tourne au moins à une vitesse proportionnelle à la vitesse de rotation de l'arbre d'entraînement.

4. Unité d'entraînement selon la revendication **3**, caractérisée par les caractéristiques suivantes :
**4.1** la chambre de pression **(15)** est formée par une unité à piston et cylindre **(13)** montée rotative ;
**4.2** l'unité à piston et cylindre **(13)** est agencée de manière coaxiale à l'embrayage à friction **(1)**;
**4.3** le piston **(16)** est mobile par rapport aux parties d'embrayage **(4, 5, 6)**.

5. Unité d'entraînement selon la revendication **3**, caractérisée par les caractéristiques suivantes :
**5.1** la chambre de pression est formée par un composant cylindrique monté rotatif avec une paroi réalisée au moins partiellement en membrane élastique et devant active par rapport aux parties d'embrayage ;
**5.2** le composant cylindrique est agencé de manière coaxiale à l'embrayage à friction.

6. Unité d'entraînement selon l'une des revendications **3** à **5**, caractérisée en ce que le moyen est un tube de puisage.

7. Unité selon l'une des revendications **3** à **6**, caractérisé en ce qu'une pluralité de dispositifs est montée en série les uns derrière les autres.
